# EUROPEAN PATENT APPLICATION

(11) **EP 4 277 063 A1**
(43) Date of publication of application: **15.11.2023**
(21) Application number: 23020203.8
(22) Date of filing: 02.05.2023
(51) Int. Cl.: H02G 3/08, H02G 3/16

(54) **JUNCTION BOX FOR ELECTRICAL CONNECTORS**

(30) Priority: 11.05.2022 GB 202206891
(71) Applicant: Scolmore (International) Limited, Tamworth, Staffordshire B79 7Ul (GB)
(72) Inventor: Surej, Solanki, Coventry, West Midlands CV6 2FB (GB)
(74) Representative: Badger, John Raymond

(57) **Abstract**

A junction box (10) comprising a rear wall (11) for attachment to a support structure, said junction box comprising a plurality of conductor entry port positions (36) and a cradle (18) for supporting at least one terminal block (19), said cradle defining a receptacle region for location and support of a terminal block, characterised in that the cradle comprises an attachment region for securing the cradle to the rear wall of the junction box, said attachment region comprising a protrusion (20) which defines a bearing surface (21, 23) that, in use, is engagable with a surface of a rear wall location formation (14, 15) and wherein when the protrusion is in engagement with the location formation the cradle (18) is rotatable relative to the rear wall.

## Description

This invention relates to a junction box for electrical conductors.

The invention relates in particular, though not exclusively, to a junction box suitable for mains voltage electrical installations.

Many designs of junction box have been proposed and include constructions in which a cradle mount is provided to support one or more terminal blocks and wherein the cradle with terminal block(s) may be fixed in position relative to the base of the junction box.

Although generally there is a consumer desire to minimise the size of the junction box, that often conflicts with the ease of use on the part of an installer. Particularly if a junction box is to be employed for effecting a junction between three or more cables which are each two or three core cables, there is preference for a relatively large junction box for ease of installation.

The present invention seeks to provide a junction box which affords an improved facility for ease of use.

In accordance with one aspect of the present invention there is provided a junction box comprising a rear wall for attachment to a support structure, said junction box comprising a plurality of conductor entry port positions and a cradle for supporting at least one terminal block, said cradle defining a receptacle region for location and support of a terminal block and an attachment region for securing the cradle to the rear wall of the junction box, said attachment region comprising a protrusion which defines a bearing surface that, in use, is engagable with a surface of a rear wall location formation and wherein when the protrusion is in engagement with the location formation the cradle is rotatable relative to the rear wall.

Preferably the inter-engagement between the cradle protrusion and the location formation of the rear wall permits rotation through at least 180°, more preferably through 360°.

To facilitate said rotational movement the protrusion preferably comprises a bearing surface of at least one of a cylindrical, conical or frusto-conical shape for cooperating with a location formation surface that at least in part is of a shape and/or dimension complementary to that defined by the bearing surface of the protrusion.

The protrusion may allow the cradle to be freely insertable into engagement with the location formation and be freely removable therefrom. Alternatively the cradle protrusion may be adapted for locking in position relative to the location formation to inhibit removal of the cradle from the location formation, for example by means of providing a click-fit assembly. Additionally or alternatively the cradle may be a friction fit with the rear wall location formation. The friction fit may serve to inhibit free rotational movement of the cradle irrespective of whether the friction fit serves also to secure the cradle against free withdrawal from the location formation or whether withdrawal from the location formation is restrained by other means such as by a click fit.

The cradle may provide support for at least one terminal block in a manner in which the terminal block is secured in a click fit manner relative to the cradle.

The protrusion may comprise a bearing surface at a radially outer position to engage with the bore of a passage defined by the rear wall. Additionally or alternatively said protrusion may define a radially inwardly facing bearing surface for engagement with the radially outer surface of a location formation of the rear wall. The protrusion may define a ribbed bearing surface.

The rear wall may comprise at least one aperture for securing the junction box to a support structure such as a support in the form of a rail in accordance with the DIN standard EN60715. A said aperture may be a through bore or a blind bore which has a knock out region which is readily removed to allow a screw or other such retainer to extend through the aperture to secure the junction box to a support structure. Two said apertures may be provided for non-rotatably securing the junction box to a support structure. A said aperture may be formed in a location formation that defines a radially outwardly facing bearing surface for cooperating with the cradle protrusion thereby to permit rotation of the cradle relative to the rear wall about an axis perpendicular to the plane of the rear wall.

In accordance with another aspect of the present invention there is provided a cradle for the support of at least one terminal block and wherein said cradle comprises a protrusion which, in use, is engagable with either of two rear wall location formations of different shapes, said protrusion comprising a radially outwardly facing bearing surface and a radially inwardly facing bearing surface whereby the cradle can be supported either by a rear wall location formation which defines a radially inwardly facing bearing surface or by one which defines a radially outwardly facing bearing surface.

Embodiments of the invention will now be described, by way of example only, with reference to the accompanying diagrammatic drawings in which
Figure 1 is a view of a junction box;
Figure 2 is a perspective view of the underside of a terminal block cradle;
Figure 3 is a perspective view of an assembly of the cradle of Figure 2 and the junction box of Figure 1;

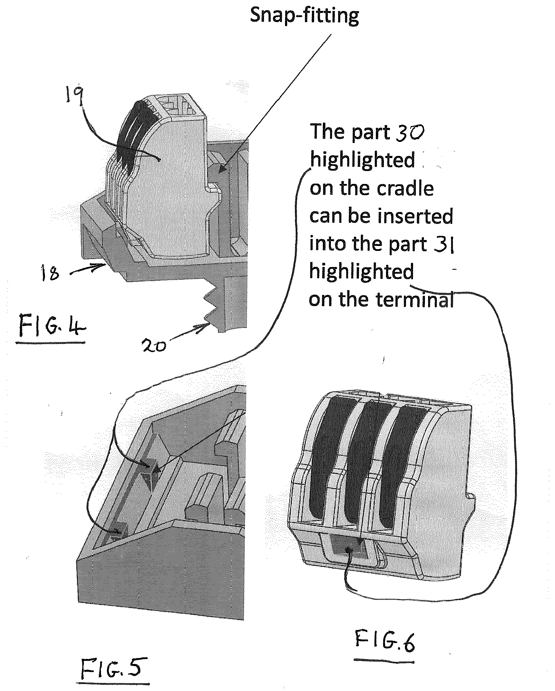

Figures 4 to 6 show details of the manner in which a terminal block is secured to the cradle;
Figure 7 is a plan view corresponding to that of Figure 3 but showing the cradle in a different position relative to the side walls of the junction box;
Figure 8 is a perspective view of a cradle in accordance with a second embodiment of the invention;
Figures 9 to 12 show different orientations of the cradle of Figure 8 relative to the side walls of a junction box;
Figure 13 is a perspective view of terminal block cradle similar to that of Figure 2 but in accordance with a third embodiment of the invention;
Figure 14 is a cross-sectional view of the cradle of Figure 13, and
Figure 15 is a perspective view of a cradle in accordance with a fourth embodiment of the invention.

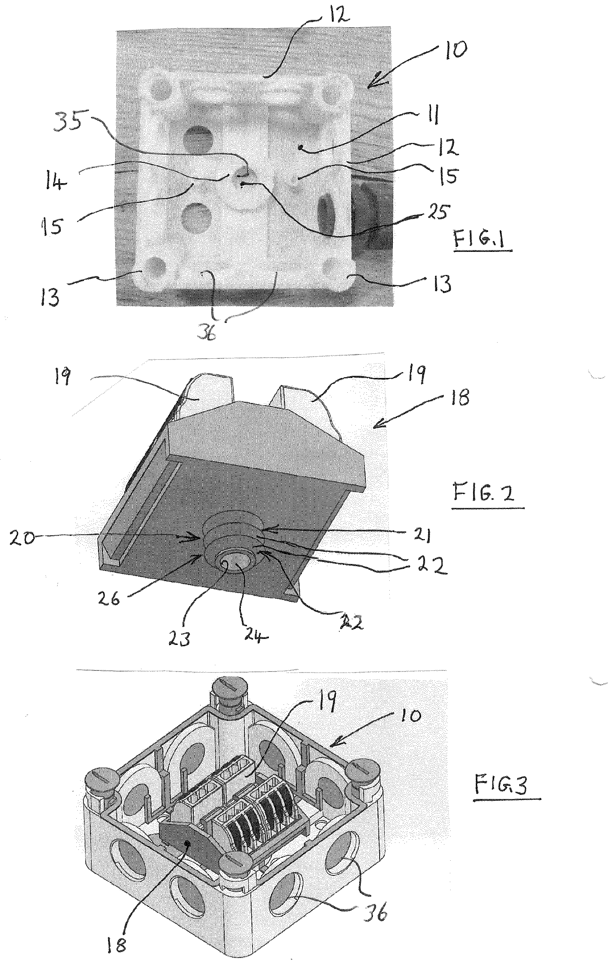

The junction box 10 of Figure 1 is of a moulded plastics construction and comprises a rear wall 11 and four side walls 12. Corner formations 13 facilitate attachment of a cover (not shown). The side walls define cable entry positions 36.

The rear wall comprises a centrally positioned boss 14 and two mounting bosses 15 spaced apart and each apertured to define through bores for receiving screws to attach the box to a DIN rail. The aperture of the centrally positioned boss 14 comprises a bore 25 that defines an inwardly facing surface 35.

Figure 2 shows a cradle 18 which at one side locates a plurality of terminal blocks 19 and at the other side is formed with an integrally moulded protrusion 20. The protrusion defines an outwardly facing face 21 which comprises a plurality of circumferentially extending flexible ribs 22. The protrusion defines also an inwardly facing cylindrical bearing surface 23 of a bore 24.

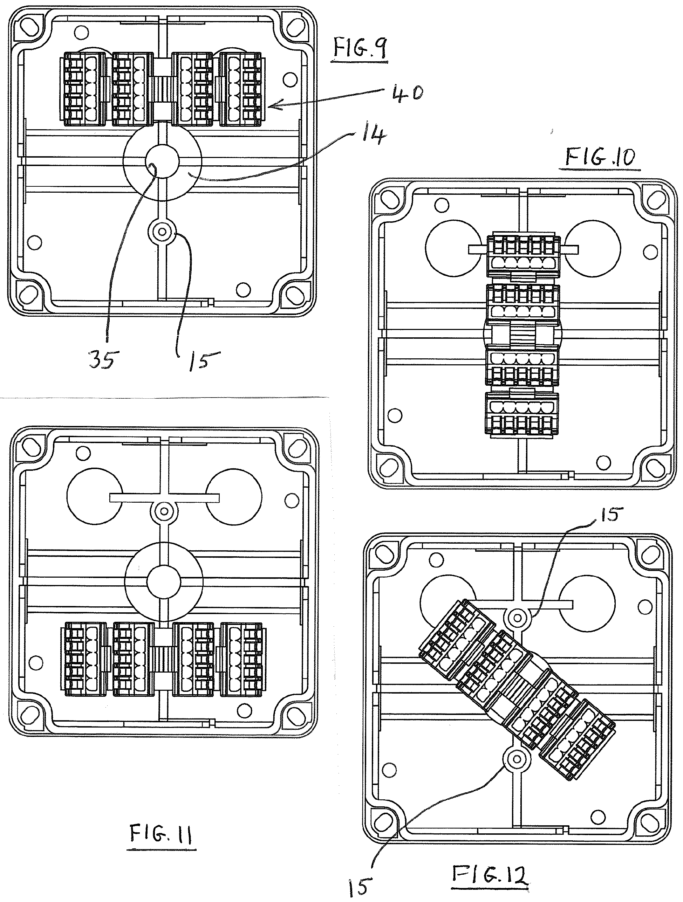

The ribs 22 define a cylindrical ribbed bearing surface 26 which is dimensioned to be a friction fit in the bore 25 of the centrally positioned boss 14. The bearing surface 23 of the bore 24 is dimensioned to be a close fit around either of the mounting bosses 15 (see also Figures 9 and 11).

The bearing surfaces 23, 26 are dimensioned in relation to the rear wall such that the cradle is rotatable relative to the rear wall in either of the mounting positions. When the cradle is located by the centrally positioned boss 14 the cradle of Figure 2 is rotatable through 360 degrees (see also Figure 10 and 12). When located by one of the mounting bosses 15, the cradle is free for only a small degree of rotation as dictated by the relative dimensions of the cradle and side walls 12.

The cradle is formed integrally with abutment surfaces 30 each to engage with a corresponding formation, defined by a recess 31, of a respective one of two terminal blocks thereby to enable the terminal blocks to be releasably secured in position on the cradle.

The cradle of the first embodiment provides support for four terminal blocks arrange in a square type formation.

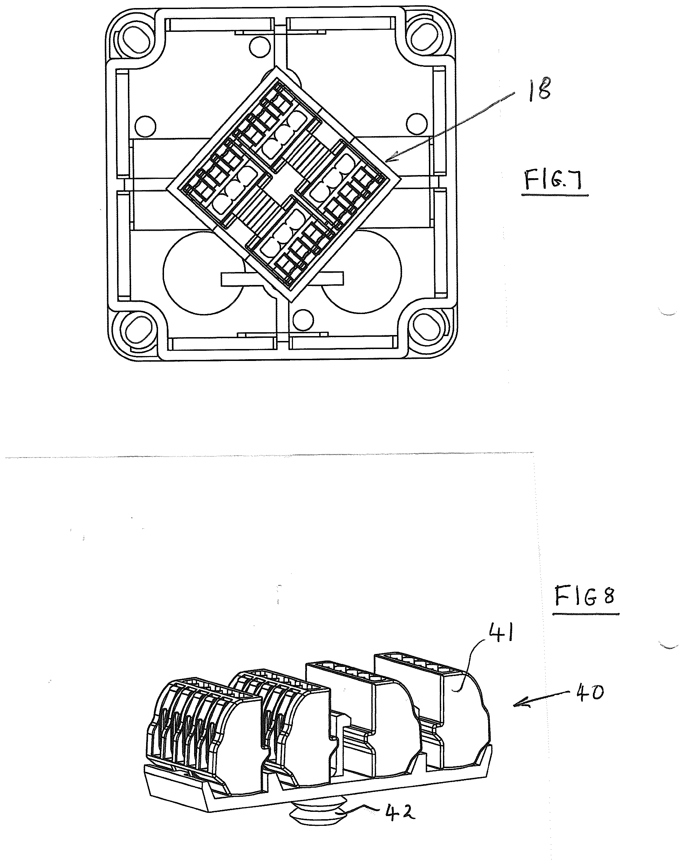

In a second embodiment (see Figures 8 to 12) a cradle 40 supports four terminal blocks 41 arranged in line with one another. As in respect of the first embodiment the cradle may be freely rotated though 360 degrees when located by the centrally positioned boss 42 but be free for only a small degree of angular movement when located by either of the mounting bosses 15 (see Figures 9 to 12.

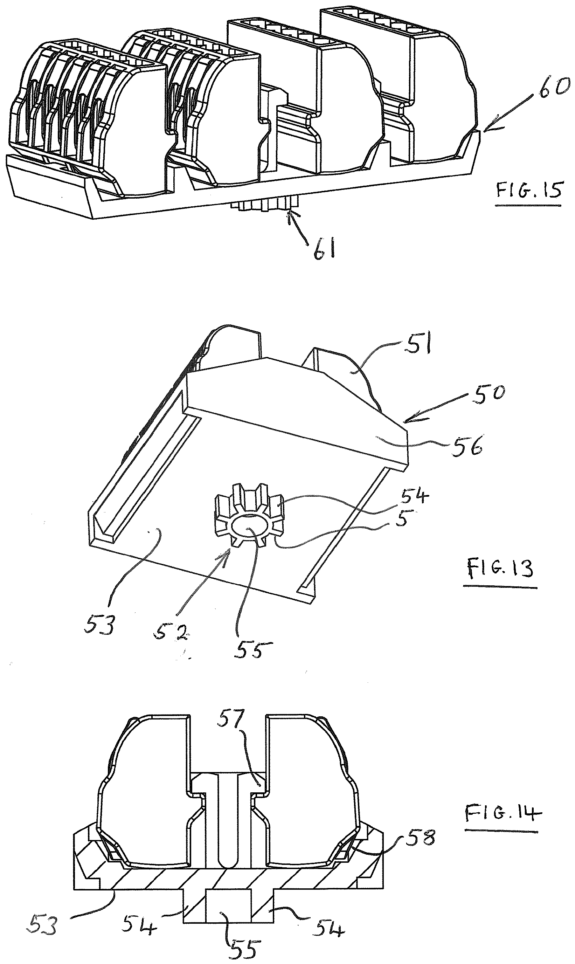

In a third embodiment of the invention (see Figures 13 and 14) a cradle 50 is substantially similar to that of Figure 2 and comprises a two-by-two array of terminal blocks 51.

The cradle 50 differs from that of Figure 2 in respect of the protrusion 52 extending from the underside 53 of the cradle. In this embodiment the protrusion 52 comprises eight ribs which are uniformly spaced about the circumference of a blind bore 55. Each rib 54 extends parallel with the longitudinal axis of the bore 55 and extends in a radially outwards direction from the axis of the bore.

Figure 14 is a cross-sectional view of the cradle and terminal blocks 51 in a plane parallel with that of the cradle end face 56 and containing the longitudinal axis of the bore 55. Figure 14 shows cradle abutments 57, 58 by means of which the terminal blocks are retained as a click fit relative to the body of the cradle.

In a fourth embodiment of the invention (see Figure 15) a cradle 60 is substantially similar to the aforedescribed cradle 40 of Figure 8 but differs in that the protrusion 42 of the second embodiment is replaced by a protrusion 61 substantially similar to the protrusion 52 of the third embodiment.

In each of the third and fourth embodiments of the invention the ribs 54 are dimensioned to provide a friction fit within the inwardly facing cylindrical bearing surface 23 of a bore 24 as shown in Figure 1.

## Claims

1. A junction box (10) comprising a rear wall (11) for attachment to a support structure, said junction box comprising a plurality of conductor entry port positions (36) and a cradle (18) for supporting at least one terminal block (19), said cradle defining a receptacle region for location and support of a terminal block, **characterised in that** the cradle comprises an attachment region for securing the cradle to the rear wall of the junction box, said attachment region comprising a protrusion (20) which defines a bearing surface (21, 23) that, in use, is engagable with a surface of a rear wall location formation (14, 15) and wherein when the protrusion is in engagement with the location formation the cradle (18) is rotatable relative to the rear wall.

2. A junction box according to claim 1 **characterised in that** the inter-engagement between the cradle protrusion (20) and the location formation (14) of the rear wall permits rotation through at least 180°.

3. A junction box according to claim 2 **characterised in that** said inter-engagement permits rotation through 360°.

4. A junction box according to any one of the preceding claims **characterised in that** the protrusion (20) comprises a bearing surface (23, 26) of at least one of a cylindrical, conical or frusto conical shape for co-operating with a location formation surface (35) that at least in part is of a shape or dimension complementary to that defined by the bearing surface.

5. A junction box according to any one of the preceding claims **characterised in that** the cradle (18) is freely insertable into engagement with the rear wall location formation and freely removable therefrom.

6. A junction box according to any one of claims 1 to 4 **characterised in that** the cradle protrusion (20) is adapted for locking in position relative to the location formation to inhibit removal of the cradle from the location formation.

7. A junction box according to any one of the preceding claims **characterised in that** the cradle (18) is a friction fit with the rear wall location formation and wherein said friction fit inhibits free rotational movement of the cradle relative to the location formation.

8. A junction box according to any one of the preceding claims **characterised in that** the cradle (20) provides support for at least one terminal block (19) in a manner in which the terminal block is secured in a click fit manner relative to the cradle.

9. A junction box according to any one of the preceding claims **characterised in that** the protrusion (20) comprises a bearing surface at a radially outer position to engage with a surface (35) of the bore (25) of a location formation (14) defined by the rear wall of the junction box.

10. A junction box according to any one of the preceding claims **characterised in that** the protrusion (20) defines a radially inwardly facing bearing surface (23) for engagement with the radially outer surface of a location formation (15) of the rear wall of the junction box.

11. A junction box according to any one of the preceding claims **characterised in that** the cradle protrusion (20) defines a ribbed bearing surface.

12. A junction box according to any one of the preceding claims **characterised in that** said rear wall comprises at least one aperture for securing to a support structure and wherein said aperture is formed in a location formation (15) that defines a radially outwardly bearing surface for cooperating with the cradle protrusion.

13. A junction box according to any one of the preceding claims **characterised in that** the cradle (18) is rotatable relative to the rear wall about an axis perpendicular to the plane of the rear wall (11).

14. A cradle (18) for the support of at least one terminal block (19) within a junction box, **characterised in that** said cradle comprises a protrusion (20) which, in use, is engagable with either of two rear wall location formations (14, 15) of the junction box, said protrusion (20) comprising a radially outwardly facing bearing surface (21) and a radially inwardly facing bearing surface (23) whereby the cradle can be supported either by a rear wall location formation which defines a radially inwardly facing bearing surface (35) or by one which defines a radially outwardly facing bearing surface (21).

15. A cradle according to claim 14 **characterised in that** the protrusion (20) comprises a plurality of ribs (22) which extend longitudinally in a direction substantially parallel with the direction in which the protrusion extends from a rear wall of the cradle.
